# EUROPÄISCHE PATENTSCHRIFT

(11) **EP 0 442 091 B1**
(45) Veröffentlichungstag und Bekanntmachung des Hinweises auf die Patenterteilung: **23.03.1994**
(21) Anmeldenummer: 90124361.8
(22) Anmeldetag: 17.12.1990
(51) Int. Cl.: G01L 3/14

(54) **Messeinrichtung zur Bestimmung des Drehmoments eines rotierenden oder feststehenden Maschinenenteils**
Device for measuring the torque of a rotating or stationary machine part
Dispositif pour mesurer le couple d'un élément de machine tournant ou fixe

(30) Priorität: 15.02.1990 DE 4004590
(43) Veröffentlichungstag der Anmeldung: 21.08.1991
(73) Patentinhaber: ROBERT BOSCH GMBH, 70442 Stuttgart (DE)
(72) Erfinder: Dobler, Klaus, Dr.-Ing., W-7016 Gerlingen (DE); Hachtel, Hansjörg, Dipl.-Ing. (FH), W-7251 Weissach (DE)

(56) Entgegenhaltungen:
- DE-A- 3 729 230
- DE-A- 3 737 696
- US-A- 4 356 732
- US-A- 4 592 241

## Beschreibung

### Stand der Technik

Die Erfindung geht aus von einer Meßeinrichtung nach der Gattung des Hauptanspruchs. Bei einer derartigen bekannten Meßeinrichtung ist das Torsionselement als Speichenrad ausgebildet. Die Speichen des Speichenrads sind fest mit der Nabe und dem Kranz verbunden und dienen als Biegestäbe. Da alle Speichen gleiche Form aufweisen, ist nur eine Drehmomenterfassung in einem einzigen Meßbereich möglich. Dieser Meßbereich muß auf alle zu erfassenden Drehmomente abgestimmt sein, so daß es schwierig ist, kleine und große Drehmomente mit entsprechender Genauigkeit und entsprechender Auflösung zu erfassen.

Ferner ist auch eine Meßeinrichtung bekannt, die zwei zu einer Welle koaxial angeordnete Körper aus elektrisch leitendem, nicht magnetischem Werkstoff aufweist. Beide Körper sind drehfest mit der Welle verbunden und gegeneinander verdrehbar. Weiterhin ist eine zur Welle koaxiale Spule vorgesehen, die von hochfrequentem Wechselstrom durchflossen und in unmittelbarer Nähe der beiden Körper angeordnet ist.

Diese weisen Ausschnitte auf, deren gemeinsame Überdeckungsfläche mit zunehmendem, zwischen den Körpern auftretenden Verdrehwinkel sich ändert, wobei durch Messung der Impedanzänderung der Spule, die durch in den Körpern induzierte Wirbelströme entsteht, die Relativverdrehung der beiden Körper erfaßbar ist. Zur Erzeugung dieser Relativverdrehung ist in axialer Richtung der Welle ein Torsionsstab angeordnet, wodurch die Meßeinrichtung relativ lang baut (US-PS 4 356 732).

Eine weitere Meßeinrichtung zur Bestimmung des Drehmomentes eines rotierenden Maschinenteils ist aus DE-A-3737696 bekannt. Diese weist ein als Speichenrad ausgebildetes Torsionselement auf. Jede zweite Speiche ist vom Kranz des Speichenrads getrennt. Im Bereich der freien Enden der Speichen befinden sich in Drehrichtung gesehen links und rechts der Enden Anschläge. Bei Durchbiegung der als Biegestäbe dienenden Speichen werden Meßsignale erzeugt, die abhängig vom übertragenen Drehmoment sind. Die Anschläge dienen als Überlastschutz für die als Biegestäbe ausgebildeten Speichen.

### Vorteile der Erfindung

Die erfindungsgemäße Meßeinrichtung mit den kennzeichnenden Merkmalen des Hauptanspruchs hat demgegenüber den Vorteil, daß mit Hilfe geteilter Biegestäbe das übertragene Drehmoment mit zwei oder mehreren Meßbereichen erfaßt werden kann. Dadurch können zum Beispiel kleine und auch hohe Drehmomente mit entsprechender Auflösung und Genauigkeit erfaßt werden. Ferner ist in besonders einfacher Weise auch ein Überlastschutz möglich. Die gesamte Meßeinrichtung baut kurz und kann bei beengten Einbauverhältnissen verwendet werden. Durch die hülsenförmigen Meßelemente mit in Achsrichtung der Welle ausgebildeten Längsschlitzen und die äußere und innere Spulenanordnung auf derselben axialen Höhe werden axiale Abstandsänderungen zwischen den Meßspulen und den Meßhülsen kompensiert. Bei relativ einfachem Aufbau und kompakter Bauweise ist eine genaue Erfassung des antreibenden bzw. abtreibenden Moments (Drehmoments) mit mehreren Meßbereichen möglich.

Durch die in den Unteransprüchen aufgeführten Maßnahmen sind vorteilhafte Weiterbildungen und Verbesserungen der im Hauptanspruch angegebenen Merkmale möglich.

### Zeichnung

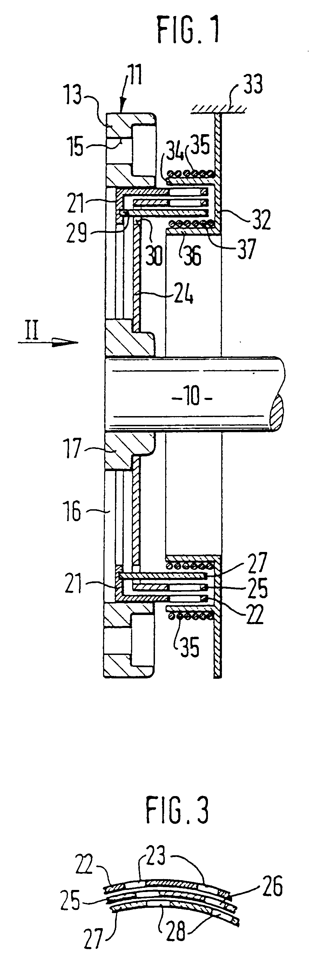

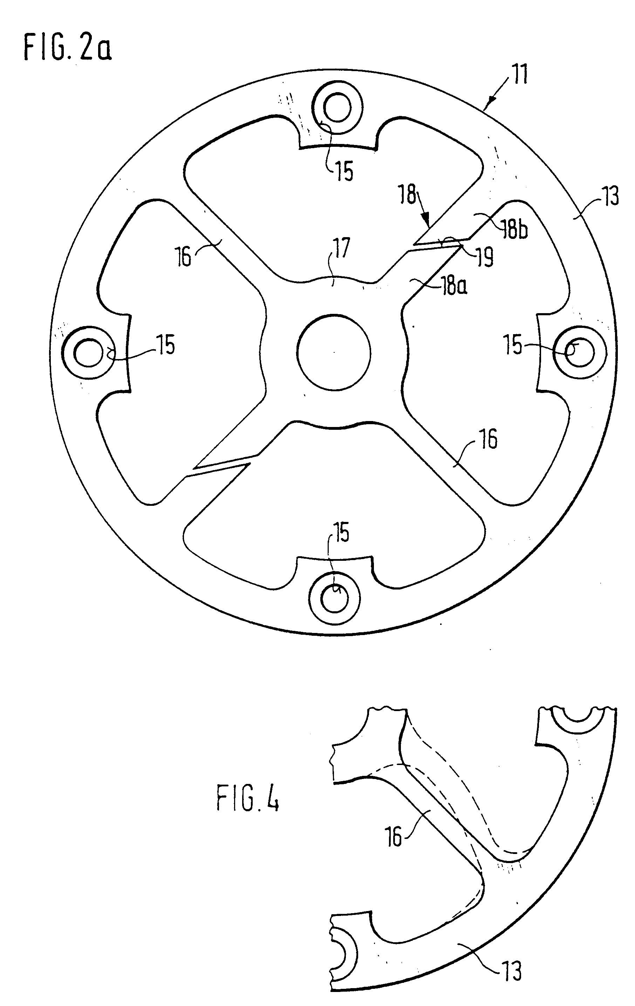

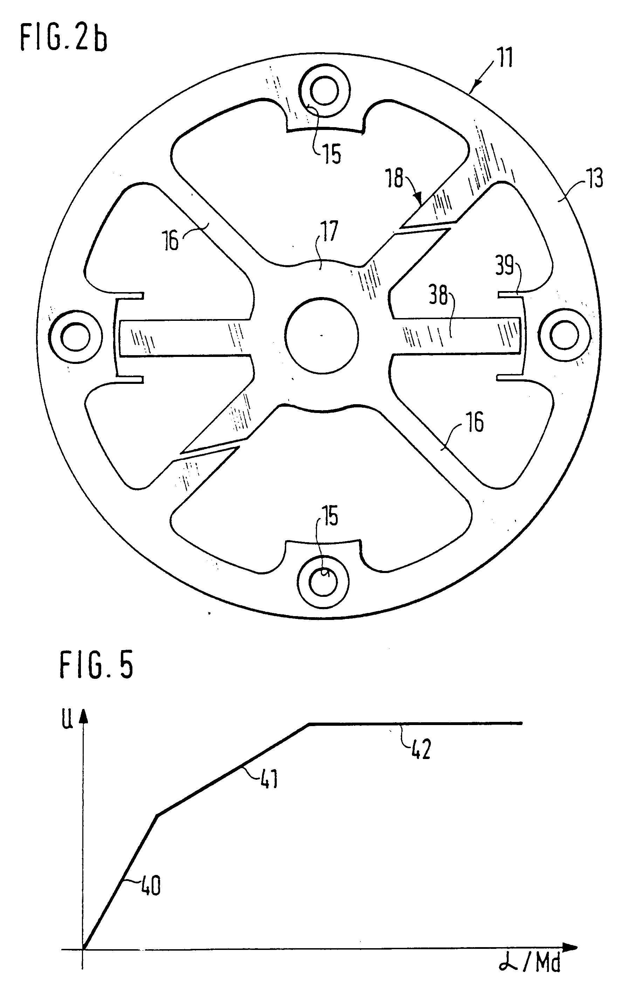

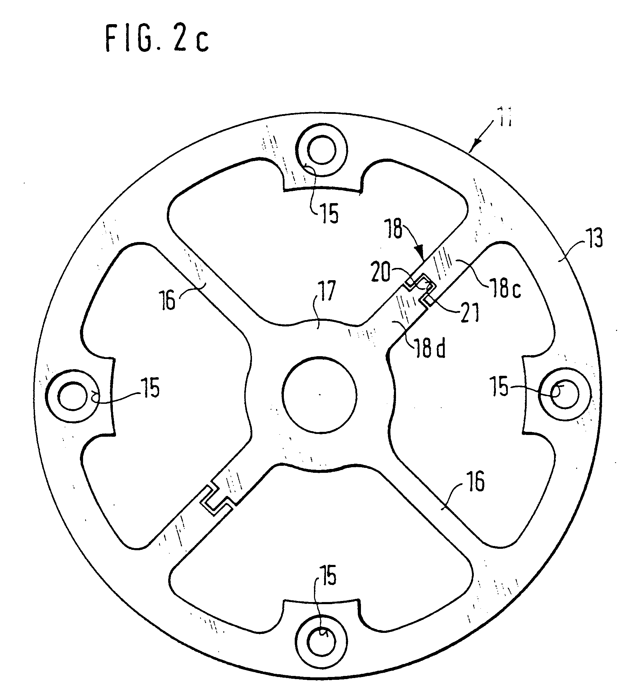

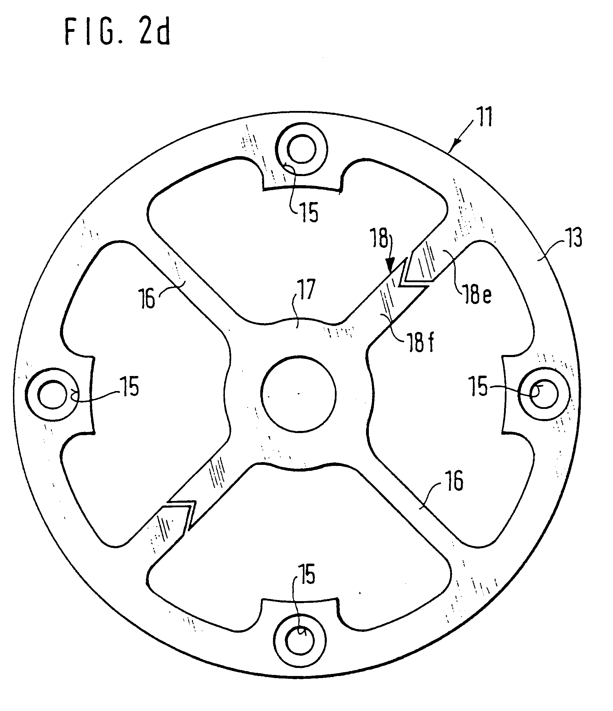

Ausführungsbeispiele der Erfindung sind in der Zeichnung dargestellt und in der nachfolgenden Beschreibung näher erläutert. Es zeigen Figur 1 einen Längsschnitt durch einen Drehmomentsensor, Figur 2a eine Ansicht des Speichenrads in Richtung II nach Figur 1, Figur 2b eine Abwandlung des Speichenrads mit Überlastschutz, Figur 2c und 2d je eine Abwandlung einer Einzelheit nach Figur 2a, Figur 3 eine Einzelheit, Figur 4 eine Darstellung des Torsionselements in Grundstellung und im tordierten Zustand und Figur 5 ein Meßdiagramm der Meßspannung U über dem Drehwinkel α bzw. dem Drehmoment Md.

### Beschreibung der Ausführungsbeispiele

In Figur 1 ist mit 10 eine Welle bezeichnet, die an einem Ende einen als Speichenrad 11 ausgebildeten Flansch aufweist. Er hat einen äußeren Kranz 13, in dem im Abstand von ca. 90° mehrere durchgehende Bohrungen 15 ausgebildet sind, über die zum Beispiel ein nicht dargestellter Elektromotor angeflanscht werden kann. Dadurch kann auf den Kranz 13 ein Antriebsdrehmoment eingeleitet werden. Die Speichen 16 des Speichenrads 11 sind fest mit der Nabe 17 und dem Kranz 13 verbunden und dienen als Biegestäbe. Zwischen diesen Speichen 16 sind jeweils Speichen 18 angeordnet, die durch einen Schlitz 19 in zwei Teile 18a, 18b aufgeteilt werden. Dieser Schlitz 19 ist in der Figur 2a unter einem Winkel von ungefähr 45° zur Achse der Speichen 18 ausgebildet. Die Speichen 18 sind dicker als die Speichen 16, so daß sie eine höhere Biegesteifigkeit aufweisen. Es sind aber auch andere Formen der Trennung der Speichen 18 in zwei Teile möglich. So wäre es zum Beispiel auch denkbar, wie in Figur 2c dargestellt, an einem Ende des Teils 18c eine Nase 20 auszubilden, die in eine Ausnehmung 21 des anderen Teils 18d ragt. In der Ausführung nach Figur 2d weist das Ende des Teils 18e ein spitzes Ende 20a auf, das in eine Ausnehmung 21a mit schräg verlaufenden Seitenwänden ragt. Entscheidend ist bei allen Formen, daß, wie später noch ausgeführt wird, zu Beginn der Verdrehung das Drehmoment alleine von den Speichen 16 übertragen wird und sich hierbei die Teile 18a, 18b der Speichen 18 nicht berühren und somit kein Drehmoment bzw. Biegemoment übertragen. Erst wenn eine vorgegebene Durchbiegung der Speichen 16 erreicht bzw. überschritten wird, sollen sich die Teile 18a, 18b berühren und eine zusätzliche Übertragung des Drehmoments übernehmen. Da die Speichen 18 eine größere Biegesteifigkeit aufweisen als die Speichen 16, wird nun das Drehmoment zusätzlich von diesen Speichen 18 übertragen, so daß der durch die Speichen 18 zusätzlich gebildete Meßbereich selbsttätig an den von den Speichen 16 gebildeten Meßbereich anschließt. Abhängig von der Biegesteifigkeit der Speichen 18 ist die Verwendung, wie oben erwähnt, als zweiter Meßbereich oder als Überlastschutz möglich. Sind die Schlitze zweier gegenüberliegender Speichen 18 in entgegengesetzter Richtung ausgebildet, so ist ein zweiter Meßbereich bzw. ein Überlastschutz in beide Drehrichtungen möglich.

Dienen die Speichen 18 als Überlastschutz und nur die Speichen 16 zur Meßwerterfassung, so ist möglichst weit im Bereich des Kranzes 13 an der Speiche 16 oder am Kranz 13 selbst mit Hilfe einer Lasche 21 eine Hülse 22 befestigt, die in Längsrichtung der Hülse 22 ausgebildete Längsschlitze 23 aufweist. Ferner ist an der Nahe 17 mit Hilfe eines Trägers 24 eine zweite Hülse 25 mit in Achsrichtung der Hülse ausgebildeten Längsschlitzen 26 angeordnet. Innerhalb der Hülse 25 befindet sich eine dritte Hülse 27, die ebenfalls in Achsrichtung der Hülse 27 ausgebildete Längsschlitze 28 aufweist. Die Hülse 27 hat an den der Speichen 16 zugewandten Seite Verlängerungen 29, mit denen die Hülse 27 durch im Träger 24 ausgebildete Öffnungen 30 ragt und an der Lasche 21 befestigt ist. Die Längsschlitze 23, 26, 28 der drei Hülsen 22, 25, 27 sind so angeordnet, daß in Ausgangsstellung die Längsschlitze 23, 26 der beiden Hülsen 22, 25 und die Längsschlitze 26, 28 der Hülsen 25, 27 sich jeweils halb überlappen. Dadurch wird bei der Relativbewegung der Hülsen 22 und 27 gegen die Hülse 25 erreicht, daß sich die Längsschlitze 23 und 26 öffnen, während sich die Längsschlitze 26, 28 schließen und umgekehrt.

Um die drei Hülsen herum ist ein im Querschnitt F-förmiger Spulenkörper 32 angeordnet, der an einem Gehäuse 33 befestigt ist. Auf der Außenwand des Hülsenteils 34 des Spulenkörpers 32 ist eine erste Spule 35 aufgewickelt. Auf dem zweiten Hülsenteil 36 des Spulenkorpers 32 ist eine zweite Spule 37 befestigt. Die Hülsen 22, 25, 27 werden zwischen den beiden Hülsenteilen 34, 36 bewegt.

Wird auf das Speicherrad 11 ein Drehmoment M1, z.B. ein Antriebsdrehmoment eingeleitet, so kann über die Welle 10 ein Drehmoment M2, ein sogenanntes Abtriebsmoment abgegriffen werden, wodurch die als Biegestäbe dienenden Speichen 16 geringfügig durchgebogen werden. In Figur 4 ist hierzu in ausgezogenen Linien das Speichenrad 11 mit den Speichen 16 in Grundstellung, d.h. mit nicht gebogenen Speichen 16 dargestellt. Mit gestrichelten Linien ist das Speichenrad 11 mit gebogenen Speichen 16 eingezeichnet. Da die Hülsen 22 und 27 starr mit dem Kranz 13 und die Hülse 25 starr mit der Nabe 17 verbunden sind, wird eine Verdrehung der beiden Hülsen 22 und 27 gegen die Hülse 25 um einen bestimmten Winkel α₁ bewirkt. Wird nun die Biegefestigkeit der Speichen 16 überschritten, so liegen auch die Teile 18a, 18b der Speichen 18 aneinander und die Speichen 18 werden durchgebogen, was bedeutet, daß die Speichen 18 das Drehmoment bzw. das Biegemoment zusätzlich übertragen und damit ein zweiter Meßbereich entsteht. Sind die Speichen 18 aber mit sehr hoher Steifigkeit ausgebildet, so dienen diese Speichen 18 als Überlastschutz.

In der Figur 2b ist eine Ausbildung des Speichenrads dargestellt, bei der mit Hilfe der Speichen 16 ein erster Meßbereich, mit Hilfe der Speichen 18 ein zweiter Meßbereich und mit Hilfe der Fortsätze 38 ein Überlastschutz möglich ist. Sobald die Fortsätze 38 an den zugeordneten Anschlägen 39 anliegen, ist der maximal meßbare Drehwinkel erreicht. In der Figur 5 ist ein hierzu gehöriges Meßdiagramm dargestellt, das den Meßspannungsverlauf U über dem Drehwinkel bzw. über dem Drehmoment darstellt. Die kleinen Drehmomente werden dabei durch die Durchbiegung der Speichen 16 erfaßt und sind als Meßbereich 40 in der Figur 5 bezeichnet. Der Meßbereich 41, des von den Speichen 18 erfaßten Drehwinkels schließt sich direkt an den Meßbereich 40 an. Sobald der Fortsatz 39 an den Anschlägen 38 zum Anschlag kommt, wird im idealen, theoretischen Fall ein konstantes Meßsignal U erreicht, das in der Figur 5 mit 42 bezeichnet ist.

Die Meßeinrichtung, wie sie in Figur 1 dargestellt ist, arbeitet nach dem induktiven oder nach dem Wirbelstrommeßprinzip. Beim Wirbelstrommeßprinzip werden die Spulen 35, 37 von einem hochfrequenten Wechselstrom durchflossen. Zur Messung wird proportional zu dem übertragenen Drehmoment die Hülse 25 sowohl relativ gegenüber der Hülse 22 als auch gegenüber der Hülse 27 verdreht. An den beiden Spulen 35, 37 entsteht ein magnetisches Wechselfeld, das auf den metallischen Oberflächen der drei Hülsen 22, 25, 27 Wirbelströme bewirkt. Je größer dabei die vom magnetischen Wechselfeld durchsetzte Fläche der Hülsen ist, desto mehr Wirbelströme werden erzeugt. Ferner ist die Größe der erzeugten Wirbelströme abhängig vom verwendeten Material der Hülsen, insbesondere deren Oberfläche, sowie vom Abstand der Hülsen 22, 25, 27 zueinander und zu den Spulen 35, 37. Durch die erzeugten Wirbelströme wird der Spulen-Wechselstromwiderstand verringert, was eine Verkleinerung der an den Spulen anliegenden Spannungen bewirkt bzw. umgekehrt bei einer Erhöhung des Spulenwechselstromwiderstands eine Erhöhung der anliegenden Spannung verursacht. In Ausgangsstellung der Meßeinrichtung sind die Längsschlitze 23 und 26 halb überdeckt, und die Schlitze 26 und 28 ebenfalls halb überdeckt. Wird ein Drehmoment über die Meßeinrichtung übertragen, so werden durch die Wand der Hülse 25 die Längsschlitze 23 der Hülse 22 um denselben Betrag verschlossen, um den die Längsschlitze 28 der Hülse 27 von der Hülse 25 geöffnet werden. Dadurch wird jeweils die den Spulen 35, 37 zugeordnete Größe der Oberflächen der Hülsen, d.h. die Größe des Bereichs, auf dem sich die Wirbelströme ausbilden können, verändert, was eine gegensinnige Änderung der Impedanz der Spulen 35, 37 bewirkt. Die Spulen 35, 37 sind in einer Wheatstone'schen Halbbrückenschaltung verschaltet, so daß das an der Meßbrücke abgegriffene Meßsignal proportional zum übertragenen Drehmoment ist. Entscheidend ist, daß axiale Verschiebungen zwischen den Hülsen und den Spulen 35, 36 und Fehler durch Umwelteinflüsse, wie z.B. Wärmedehnungen kompensiert werden, da sie in beiden Spulen das Signal in gleicher Richtung ändern. Die so gewonnenen Meßsignale werden einer Auswerteschaltung zugeführt, so daß ein angeschlossenes Maschinenteil gesteuert bzw. geregelt werden kann.

Besonders vorteilhaft ist eine Anwendung des Drehmomentsensors in direkter Kombination mit einem Elektromotor, wie beispielsweise bei einer elektromotorischen Lenkhilfe für ein Fahrzeug. Die Welle 10 führt dann zum Lenkgetriebe. An dem Speichenrad 11 ist die Lenkwelle oder ein Servomotor befestigt. Bei Lenkhilfen ist eine besonders kompakte Bauweise notwendig, die durch die beschriebene Ausbildung mit Biegestäben in Form eines Speichenrades ermöglicht wird.

## Patentansprüche

1. Meßeinrichtung zur Bestimmung des Verdrehwinkels oder Drehmoments eines rotierenden oder feststehenden Maschinenteils mit einem als Speichenrad (11) ausgebildeten Torsionselement, das mit mehreren Meßelementen verbunden ist, dadurch gekennzeichnet, daß mindestens eine Speiche (18) des Speichenrads (11) so durchgetrennt ist, daß die Teile (18a - f) der Speiche(n) (18) bei Überschreiten einer vorgegebenen Durchbiegung der anderen Speichen (16) aneinander liegen.

2. Meßeinrichtung nach Anspruch 1, dadurch gekennzeichnet, daß die Biegesteifigkeit der durchgetrennten Speichen (18) so hoch ist, daß ein Überlastschutz des Speichenrads (11) entsteht.

3. Meßeinrichtung nach Anspruch 1, dadurch gekennzeichnet, daß die Biegesteifigkeit der durchgetrennten Speichen (18) so hoch ist, daß mindestens ein zweiter Meßbereich entsteht.

4. Meßeinrichtung nach Anspruch 3, dadurch gekennzeichnet, daß mindestens eine dritte Speiche (38) ein freies Ende aufweist und als Überlastschutz mit einem Anschlag (39) des Speichenrads (11) in Wirkverbindung steht.

5. Meßeinrichtung nach einem der Ansprüche 1 bis 4, dadurch gekennzeichnet, daß die durchgetrennten Speichen (18) einen Schlitz (19) aufweisen.

6. Meßeinrichtung nach Anspruch 5, dadurch gekennzeichnet, daß der Schlitz (19) unter einem Winkel von ungefähr 45° zur Achsrichtung der Speiche (18) ausgebildet ist.

7. Meßeinrichtung nach einem der Ansprüche 1 bis 6, dadurch gekennzeichnet, daß an der nicht durchgetrennten Speiche (16) ein erster (22) und ein zweiter (27) hülsenförmiger Körper mit in regelmäßigen Abständen ausgebildeten Schlitzen (23) bzw. (28) angeordnet sind, daß die Schlitze (23, 28) des ersten (22) und des zweiten Körpers (27) gegeneinander versetzt sind, daß zwischen dem ersten (22) und zweiten Körper (27) ein dritter hülsenförmiger Körper (25) angeordnet ist, der am Fuß (17) der nicht durchgetrennten Speiche (16) befestigt ist, so daß sich abhängig von der Biegung der nicht durchgetrennten Speiche (16) eine relative Verschiebung der Schlitze (23, 26, 28) des ersten und zweiten Körpers zu den Schlitzen (26) des dritten Körpers (25) ergibt, und daß dem ersten Körper (22) und den dritten Körper (27) je mindestens eine Spule (35, 37) zugeordnet ist, die konzentrisch zueinander liegen und deren Impedanz in Abhängigkeit der relativen Stellung der Schlitze (23, 26, 28) verändert wird.

8. Meßeinrichtung nach Anspruch 7, dadurch gekennzeichnet, daß die hülsenförmigen Körper (22, 25, 27) in radialer Richtung angeordnet sind und die Schlitze (23, 26, 28) in Längsrichtung der Körper ausgebildet sind.

9. Meßeinrichtung nach Anspruch 7 oder 8, dadurch gekennzeichnet, daß die Spulen (35, 37) in einer Wheatstone'schen Brückenschaltung verschaltet sind.

## Claims

1. Measuring device for determining the rotary angle or torque of a rotating or stationary machine part, with a torsion element which is designed as a spoked wheel (11) and which is connected to a plurality of measuring elements, characterized in that at least one spoke (18) of the spoked wheel (11) is severed in such a way that the parts (18a-f) of the spoke(s) (18) bear against one another when a predetermined flexion of the other spokes (16) is exceeded.

2. Measuring device according to Claim 1, characterized in that the flexural strength of the severed spokes (18) is so high that an overload protection of the spoked wheel (11) is obtained.

3. Measuring device according to Claim 1, characterized in that the flexural strength of the severed spokes (18) is so high that at least one second measuring range is obtained.

4. Measuring device according to Claim 3, characterized in that at least one third spoke (38) has a free end and is operatively connected as overload protection to a stop (39) of the spoked wheel (11).

5. Measuring device according to one of Claims 1 to 4, characterized in that the severed spokes (18) have a slot (19).

6. Measuring device according to Claim 5, characterized in that the slot (19) is formed at an angle of approximately 45° to the axial direction of the spoke (18).

7. Measuring device according to one of Claims 1 to 6, characterized in that a first (22) and a second (27) sleeve-shaped body having slots (23) and (28) formed at regular spacings are arranged on the non-severed spoke (16), in that the slots (23, 28) of the first (22) and of the second (27) body are offset relative to one another, in that arranged between the first (22) and second (27) body is a third sleeve-shaped body (25) which is fastened to the foot of the non-severed spoke (16), so that a relative displacement of the slots (23, 26, 28) of the first and second body in relation to the slots (26) of the third body (25) occurs in dependence on the flexion of the non-severed spoke (16), and in that the first body (22) and the third body (27) are each assigned at least one coil (35, 37), which are concentric to one another and the impedance of which is varied in dependence on the relative position of the slots (23, 26, 28).

8. Measuring device according to Claim 7, characterized in that the sleeve-shaped bodies (22, 25, 27) are arranged in the radial direction, and the slots (23, 26, 28) are formed in the longitudinal direction of the bodies.

9. Measuring device according to Claim 7 or 8, characterized in that the coils (35, 37) are interconnected in a Wheatstone bridge connection.

## Revendications

1. Installation de mesure pour déterminer l'angle de rotation ou un couple d'un élément rotatif ou fixe d'une machine, comportant un élément de torsion en forme de roue à rayons (11) relié à plusieurs éléments de mesure, installation caractérisée en ce qu'au moins un rayon (18) de la roue à rayons (11) est coupé pour que les parties (18a - f) du ou des rayons (18) soient appliquées l'une contre l'autre lors du dépassement d'une flexion prédéterminée des autres rayons (16).

2. Installation de mesure selon la revendication 1, caractérisée en ce que la résistance à la flexion des rayons (18), coupés, est suffisamment élevée pour qu'il y ait une protection de la roue à rayons (11) à la surcharge.

3. Installation de mesure selon la revendication 1, caractérisée en ce que la résistance à la flexion des rayons (18), coupés, est suffisamment élevée pour donner au moins une seconde plage de mesures.

4. Installation de mesure selon la revendication 3, caractérisée en ce qu'au moins un troisième rayon (38) comporte une extrémité libre et coopère comme protection de surcharge avec une butée (39) de la roue à rayons (11).

5. Installation de mesure selon l'une des revendications 1 à 4, caractérisée en ce que les rayons (18) coupés ont une fente (19).

6. Installation de mesure selon la revendication 5, caractérisée en ce que la fente (19) fait un angle d'environ 45° par rapport à la direction axiale du rayon (18).

7. Installation de mesure selon l'une des revendications 1 à 6, caractérisée en ce que le rayon (16) non coupé comporte un premier élément (22) et un second élément (27) en forme de manchon avec des fentes (23, 28) réparties à distance régulière, les fentes (23, 28) du premier manchon (22) et celles du second manchon (27) sont décalées l'une par rapport à l'autre pour qu'entre le premier manchon (22) et le second manchon (27) on puisse avoir un troisième manchon (25) qui soit fixé à la base (17) des rayons (16) non coupés de façon qu'en fonction de la flexion des rayons (16) non coupés il y ait un déplacement relatif des fentes (23, 26, 28) du premier et du second manchon par rapport aux fentes (26) du troisième manchon (25) et en ce qu'au premier manchon (22) et au troisième manchon (27) on associe au moins un enroulement (35, 37), ces enroulements étant concentriques et leur impédance variant en fonction de la position relative des fentes (23, 26, 28).

8. Installation de mesure selon la revendication 7, caractérisée en ce que les manchons (22, 25, 27) sont montés dans la direction radiale et les fentes (23, 26, 28) sont dirigées dans la direction longitudinale du manchon respectif.

9. Installation de mesure selon la revendication 7 ou 8, caractérisée en ce que les enroulements (35, 37) sont montés dans un pont de Wheatstone.
